# EUROPÄISCHE PATENTSCHRIFT

(11) **EP 1 201 900 B1**
(45) Veröffentlichungstag und Bekanntmachung des Hinweises auf die Patenterteilung: **03.09.2008**
(21) Anmeldenummer: 01122829.3
(22) Anmeldetag: 22.09.2001
(51) Int. Cl.: F02D 41/30, F01N 11/00, F02D 41/02, F02D 37/02

(54) **Steuerverfahren für einen Verbrennungsmotor mit einem Abgas-Katalysator**
Control method for an internal combustion engine with exhaust gas catalyst
Méthode de contrôle d'un moteur à combustion interne avec un catalyseur de gaz d'échappement

(30) Priorität: 28.10.2000 DE 10053629
(43) Veröffentlichungstag der Anmeldung: 02.05.2002
(73) Patentinhaber: Bayerische Motoren Werke Aktiengesellschaft, 80809 München (DE)
(72) Erfinder: Preuss, Florian, 80809 München (DE); Detterbeck, Stefan, 80804 München (DE); Ramatschi, Stephan, 85604 Zorneding (DE); Müller, Peter, 81673 München (DE); Hasenclever, Hanns-Christian, 80809 München (DE)

(56) Entgegenhaltungen:
- EP-A- 0 858 837
- DE-A- 3 841 685
- DE-A- 19 851 564
- DE-A- 19 942 270
- US-A- 5 857 163
- US-A1- 2001 015 066

## Beschreibung

Die Erfindung betrifft ein Steuerverfahren für einen Verbrennungsmotor mit einem Abgas-Katalysator gemäß dem Oberbegriff des Anspruchs 1.

Es ist bekannt, die Abgase aus einem Verbrennungsmotor mittels eines Abgas-Katalysators zu reinigen. Damit können die Emissionen eines Verbrennungsmotors reduziert werden. Zum einen erreichen die bekannten Katalysatoren jedoch erst ab einer bestimmten Betriebstemperatur ihre volle Wirksamkeit. Damit die Katalysatoren ihre optimale Betriebstemperatur möglichst schnell nach einem Motorstart erreichen, werden sie meist durch bestimmte Maßnahmen aufgeheizt, beispielsweise mittels einer Zündwinkelverstellung, mittels eines Sekundärluftsystems oder einer elektrischen Heizung. Zum anderen nimmt die Wirksamkeit von gealterten Katalysatoren ab, beziehungsweise die Betriebscharakteristik verändert sich.

Aus der DE 41 33 117 A1 ist ein Verfahren zur Abgasentgiftung von Brennkraftmaschinen bekannt, bei dem ein in einem Abgassystem angeordneter Katalysator durch Zufuhr von Sekundärluft ins Abgas und/oder durch eine elektrisch Beheizung vorgewärmt wird. Um eine gleichmäßige Abgasentgiftung über die gesamte Betriebszeit des Fahrzeugs zu gewährleisten, wird die Vorwärmung an den Alterungszustand des Katalysators angepasst. Insbesondere wird dabei der Grad der Vorwärmung mit zunehmender Alterung angehoben.

In der DE 38 41 685 A1 ist ein Verfahren zur Erkennung des Zustandes eines Katalysators beschrieben, bei dem eine Phasenverschiebung zwischen den Signalen von zwei räumlich voneinander getrennt abgeordneten Abgasmesssonden ein Maß für die Alterung des Katalysators liefert. Das Ergebnis der Messung der Phasenverschiebung wird als zusätzlicher Eingabeparameter für die herkömmliche Regelung verwendet und ermöglicht so laufzeitabhängige Regelungseingriffe. Dabei wird in ein kontinuierliches Regelungsverfahren eingegriffen.

Ferner ist aus der US 5,857,163 B ist ein Verfahren zur online-Bestimmung der Katalysatoralterung mittels einem Berechnungsmodell bekannt. Die Motorsteuerung erfolgt dabei in Abhängigkeit von der ermittelten Katalysatoralterung.

Aus der DE 198 51 564 A1 ist ein Verfahren zum Betreiben und Überprüfen eines NOx-Speicherkatalysators einer Mager-Brennkraftmaschine bekannt, wobei in Abhängigkeit vom Alterungsgrad des Speicherkatalysators verschiedene Betriebsstrategien für den Speicherkatalysator und/oder die Brennkraftmaschine eingeleitet werden.

Aufgabe der vorliegenden Erfindung ist es, eine weitere Maßnahme anzugeben, mit der die Einhaltung der vorgegebenen Emissionsgrenzen auch bei gealterten Katalysatoren möglich ist und ein Kompromiss zwischen einem schadstoffoptimierten Betrieb einerseits und einer optimierten Leistung, einer Verbrauchsoptimierung oder einer ausreichenden Laufruhe andererseits sichergestellt werden kann.

Diese Aufgabe wird durch die Merkmale des Anspruchs 1 gelöst.

Dabei besteht ein Kerngedanke der vorliegenden Erfindung darin, die Übergänge zwischen zumindest zwei Betriebsarten, von denen eine Betriebsart emissionsoptimiert ist, in Abhängigkeit vom Alterungszustand des Katalysators zu wählen. Je nach Betriebsziel kann ein Verbrennungsmotor mit einer verbrauchsoptimierten, leistungsoptimierten oder laufruheoptimierten Betriebsart mit entsprechender Zündwinkel-, Drossel-, und λ-Einstellung betrieben werden. Bei der Einstellung des Luft/Kraftstoffgemisches ist grundsätzlich ein Betrieb mit einem fetten Luft/Kraftstoffverhältnis, einem homogenen Luft/Kraftstoffverhältnis oder einem mageren Luft/Kraftstoffverhältnis möglich. Überdies kann bezüglich der Betriebsart in einen Betrieb mit geschichteter Befüllung umgeschaltet werden

Zunächst wird mittels der zumindest einen im Abgasweg angeordneten Abgasmesssonde der Alterungszustand des Katalysators bestimmt. Ausführungsbeispiele hierfür sind aus dem (auch oben genannten) Stand der Technik bekannt. In Abhängigkeit vom Alterungszustand werden dann die Übergänge zwischen den einzustellenden, möglichen Betriebsarten gewählt. Gemäß der Erfindung wird ein Betrieb mit einer homogenen Luft/Kraftstoffverteilung zu Startbeginn des Fahrzeugs je nach Alterungszustand des Katalysators länger gewählt und erst nach einer vom Alterungszustand abhängigen Zeitspanne in einen geschichteten Betrieb übergegangen. Überdies ist auch die Wahl einer völlig anderen Betriebsart in Abhängigkeit vom Katalysatoralterungsgrad möglich. Damit können zwar dann nicht mehr die optimalen Leistungs-, Verbrauchs- und Laufruheergebnisse erreicht werden. Jedoch ist es möglich, die Emissionsgrenzen in jedem Fall einzuhalten. In einer Weiterbildung der Erfindung gemäß Patentanspruch 2 kann ein Zeitpunkt, eine Dauer und ein Maß der Zündwinkelverschiebung und/oder einer Drosselung der Luftzufuhr in Abhängigkeit von der Katalysatoralterung bestimmt werden. Eine Weiterbildung der Erfindung gemäß Patentanspruch 3 sieht vor, dass der Zustand des Katalysators unter Verwendung zumindest einer im Abgasweg angeordneten Abgasmesssonde durch Auswertung dessen Signals bestimmt wird; und gemäß Patentanspruch 4 wird vorgeschlagen, dass der Zustand des Katalysators unter Verwendung von Fahrzeug- oder Motorbetriebsdaten wie Geschwindigkeit, Fahrstrecke, Last etc. abgeschätzt wird.

Die vorliegende Erfindung wird nachfolgend anhand von verschiedenen Ausführungsbeispielen und mit Bezug auf die beiliegenden Zeichnungen näher erläutert. Die Zeichnungen zeigen in
- Figur 1: ein schematisches Blockdiagramm einer Vorrichtung zur Durchführung des erfindungsgemäßen Verfahrens, und
- Figur 2: ein einfaches Ablaufdiagramm einer möglichen Ausführungsform der Erfindung.

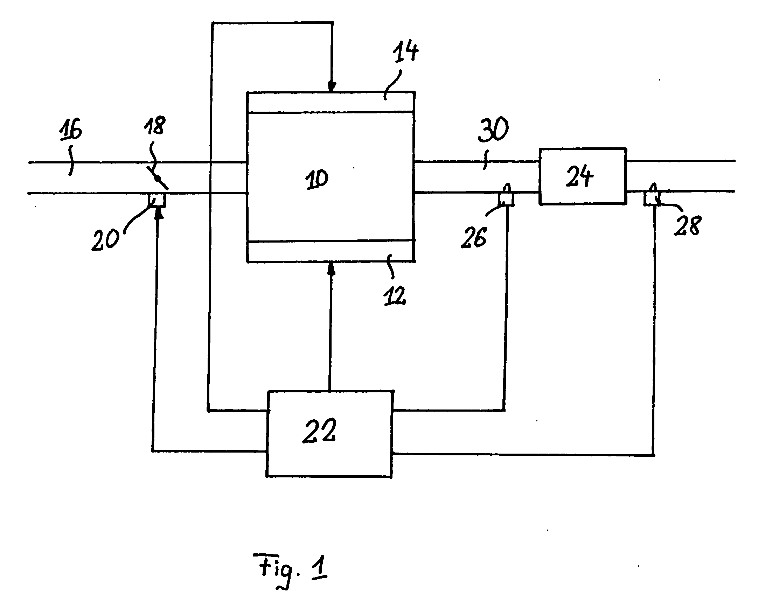

Im schematischen Blockdiagramm in Figur 1 ist ein Motor 10 mit einem Ansaugbereich 16 und einer Abgasanlage 30 dargestellt. Am Motor 10 sind - nur schematisch angedeutet - eine Einspritzanlage 12 sowie eine Zündanlage 14 angeordnet. Beide Anlagen 12, 14 werden von einer Steuer-und Regeleinrichtung 22 beaufschlagt. Die Steuer- und Regeleinrichtung 22 ist ferner mit einem Aktor 20, zur Verstellung einer im Ansaugbereich 16 angeordneten Drosselklappe 18 verbunden. Ferner erhält die Steuer- und Regeleinrichtung 22 Signale von vor- und nach einem Katalysator 24 im Abgasstrang 30 angeordneten λ-Sonden 26 und 28. Aufgrund des Vergleichs beider Signale der λ-Sonden 26 und 28 kann auf den Alterungszustand des Katalysators 24 geschlossen werden.

Je nach Alterungszustand des Katalysators wird in der Steuer- und Regelvorrichtung 22 zusammen mit anderen erfaßten und bestimmten Parametern eine jeweilige Betriebsart für den Verbrennungsmotor 10 festgelegt, die dann mittels der Zündanlage 14, der Einspritzanlage 12 sowie der Drosselklappe 18 realisiert wird.

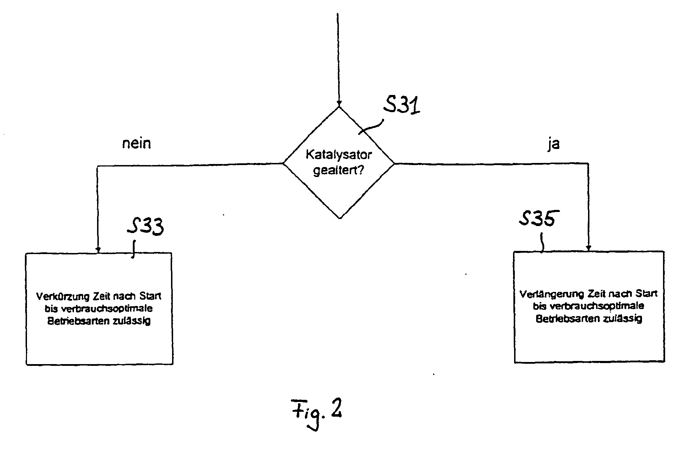

Bei einer möglichen Ausführungsform des erfindungsgemäßen Verfahrens (Figur 2) wird in einem Schritt S31 zunächst festgestellt, ob der Katalysator gealtert ist. Ist dies der Fall (ja), so wird eine nicht verbrauchsoptimale Betriebsart über eine längere Zeit nach dem Start durchgeführt (Schritt S35), und zwar solange, bis eine verbrauchsoptimale Betriebsart zulässig ist.

Ist der Katalysator nicht gealtert (nein), so findet eine normale Umschaltung in eine verbrauchsoptimale Betriebsart nach einer vorgegebenen und gegenüber dem Schritt S35 verkürzten Zeitspanne statt (Schritt S33).

Insgesamt wird die jeweilige Betriebsart des Verbrennungsmotors zumindest in Abhängigkeit von der Alterung des Katalysators gewählt, so dass kontinuierlich die Einhaltung der Verbrauchswerte gewährleistet werden kann.

## Patentansprüche

1. Steuerverfahren für einen Verbrennungsmotor (10) mit einem Abgas-Katalysator (24), bei dem der Alterungsgrad des Katalysators (24) erfaßt wird, und bei dem der Verbrennungsmotor (19) in zumindest zwei Betriebsarten betreibbar ist, wobei eine Betriebsart emissionsgünstiger ist,
wobei ein Übergang von einer Betriebsart des Verbrennungsmotors (10) zu einer anderen Betriebsart in Abhängigkeit vom Alterungszustand des Katalysators (24) gewählt wird,
**dadurch gekennzeichnet, dass** die Betriebsarten einen homogenen sowie einen geschichteten Betrieb umfassen, wobei
der Betrieb mit einer homogenen Luft/Kraftstoffverteilung zu Startbeginn des Fahrzeugs, je nach Alterungszustand des Katalysators (24), länger gewählt und erst nach einer vom Alterungszustand des Katalysators (24) abhängigen Zeitspanne in einen geschichteten Betrieb übergegangen wird.

2. Steuerverfahren nach Anspruch 1,
**dadurch gekennzeichnet,**
**dass** ein Zeitpunkt, eine Dauer und ein Maß der Zündwinkelverschiebung und/oder einer Drosselung der Luftzufuhr in Abhängigkeit von der Katalysatoralterung bestimmt wird.

3. Steuerverfahren nach einem der vorhergehenden Ansprüche,
**dadurch gekennzeichnet,**
**dass** der Zustand des Katalysators (24) unter Verwendung zumindest einer im Abgasweg (30) angeordneten Abgasmesssonde (26; 28) durch Auswertung dessen Signales bestimmt wird.

4. Steuerverfahren nach einem der Ansprüche 1 oder 2,
**dadurch gekennzeichnet,**
**dass** der Zustand des Katalysators (24) unter Verwendung von Fahrzeug-oder Motorbetriebsdaten wie Geschwindigkeit, Fahrstrecke, Last etc. abgeschätzt wird.

## Claims

1. A control method for an internal combustion engine (10) with an exhaust gas catalyst (24), in which the degree of aging of the catalyst (24) is detected, and in which the internal combustion engine (19) can be operated in at least two types of operation, in which one type of operation is more favourable with respect to emissions, wherein a transition from one type of operation of the internal combustion engine (10) to another type of operation is selected as a function of the aging state of the catalyst (24), **characterised in that** the types of operation comprise homogeneous and stratified operation, operation with a homogeneous air/fuel distribution at the commencement of starting the vehicle being selected to be longer depending on the aging state of the catalyst (24) and a transition to stratified operation only being made after a timespan which depends on the aging state of the catalyst (24).

2. A control method according to claim 1, **characterised in that** an instant, a duration and a degree of ignition angle shift and/or a throttling of the air supply are determined as a function of the catalyst aging.

3. A control method according to any one of the preceding claims, **characterised in that** the state of the catalyst (24) is determined using at least one exhaust gas measuring probe (26; 28) arranged in the exhaust gas path (30) by evaluating the signal thereof.

4. A control method according to claim 1 or claim 2, **characterised in that** the state of the catalyst (24) is estimated using vehicle or engine operating data, such as speed, driving distance, load and so forth.

## Revendications

1. Procédé de commande d'un moteur à combustion interne (10) équipé d'un catalyseur à gaz d'échappement (24) selon lequel on saisit l'état de vieillissement du catalyseur (24) et on fait fonctionner le moteur à combustion interne (19) au moins dans deux modes de fonctionnement, l'un des modes de fonctionnement étant plus avantageux du point de vue des émissions,
et on sélectionne le passage d'un mode de fonctionnement du moteur à combustion interne (10) à un autre mode de fonctionnement selon l'état de vieillissement du catalyseur (24),
**caractérisé en ce que**
les modes de fonctionnement comprennent le mode homogène et le mode stratifié,
le mode de fonctionnement avec une distribution homogène air/carburant étant choisi plus longtemps au début du démarrage du véhicule suivant l'état de vieillissement du catalyseur (24) et ce n'est qu'après une durée dépendant de l'état de vieillissement du catalyseur (24) que l'on passe en mode stratifié.

2. Procédé de commande selon la revendication 1,
**caractérisé en ce qu'**
on détermine un instant, une durée et une mesure du décalage de l'angle d'allumage et/ou un étranglement de l'alimentation en air en fonction du vieillissement du catalyseur.

3. Procédé de commande selon l'une des revendications précédentes,
**caractérisé en ce qu'**
on détermine l'état du catalyseur (24) en utilisant au moins une sonde de mesure des gaz d'échappement (26 ; 28) installée dans le chemin des gaz d'échappement (30) par l'exploitation du signal de la sonde.

4. Procédé de commande selon l'une des revendications 1 ou 2,
**caractérisé en ce qu'**
on évalue l'état du catalyseur (34) en utilisant des données de fonctionnement du véhicule ou du moteur telles que la vitesse, le trajet parcouru, la charge, etc.
